**Europäisches Patentamt**

**European Patent Office**

**Office européen des brevets**

(19)

(11) Veröffentlichungsnummer: **0 465 699 A1**

## (12) EUROPÄISCHE PATENTANMELDUNG

(21) Anmeldenummer: **90113179.7**

(22) Anmeldetag: **10.07.90**

(51) Int. Cl.5: **H02M 7/521**, H03K 17/08

(43) Veröffentlichungstag der Anmeldung:
**15.01.92 Patentblatt 92/03**

(84) Benannte Vertragsstaaten:
**AT CH DE ES FR GB IT LI SE**

(71) Anmelder: **SIEMENS AKTIENGESELLSCHAFT**
**Wittelsbacherplatz 2**
**W-8000 München 2(DE)**

(72) Erfinder: **Marquardt, Rainer, Dr.-Ing.**
**Eskilstunastrasse 29**
**W-8520 Erlangen(DE)**

(54) Steuerverfahren für abschaltbare Stromrichterventile eines Brückenzweiges eines Stromrichters.

(57) Die Erfindung bezieht sich auf ein Verfahren und eine Schaltungsanordnung zur Steuerung von abschaltbaren Stromrichterventilen (V1, V2) eines Brückenzweiges (6) eines Stromrichters (4) mit eingeprägter Gleichspannung (UZ), die alternierend ein- und ausschalten in Abhängigkeit von Steuersignalen (AV1', AV2'), die jeweils von einer Steuervorrichtung (14, 16) erzeugt sind. Erfindungsgemäß werden Bereiche der erzeugten und bereitgestellten Steuersignale (AV1', AV2') in Abhängigkeit des Laststrom-Istwertes ($i_{Lx}$) in Bezug zu zwei Laststrom-Grenzwerten (I1, I2) ausgeblendet, wodurch sich für die abschaltbaren Stromrichterventile (V1, V2) neue Steuersignale (AV1, AV2) ergeben. Somit wird verhindert, daß ein Abschaltversagen infolge zu hoher Sperrschichttemperaturen des Stromrichterventils (V1 bzw. V2) zu einem gleichspannungsseitigen Kurzschluß des Stromrichters (4) führt.

EP 0 465 699 A1

Die Erfindung bezieht sich auf ein Verfahren und eine Schaltungsanordnung zur Steuerung von abschaltbaren Stromrichterventilen eines Brückenzweiges eines Stromrichters mit eingeprägter Gleichspannung, die alternierend ein- bzw. ausschalten in Abhängigkeit von Steuersignalen, die jeweils von einer Steuervorrichtung erzeugt werden.

Aus der EP 0 176 800 A1 ist ein Verfahren und eine Vorrichtung zum Betreiben eines Abschaltthyristors bekannt. Bei diesem bekannten Verfahren ist ein Abschaltthyristor in Abhängigkeit von einem Einschaltbefehl bzw. einem Ausschaltbefehl in einen stromleitenden bzw. stromsperrenden Schaltzustand steuerbar. Um einen besonders zuverlässigen und optimalen Betrieb des Abschaltthyristors zu ermöglichen, wird die Spannung zwischen seinem Gate-Anschluß und seinem Kathoden-Anschluß erfaßt und beim Unterschreiten eines negativen Schwellenspannungswertes ein Zustandssignal erzeugt, das den stromsperrenden Schaltzustand des Abschaltthyristors anzeigt. Bei einer weiteren Lösung wird gleichzeitig mit dem Auftreten des Abschaltbefehls ein Zeitablauf mit einer vorgegebenen Ablaufzeit veranlaßt und wird ein Fehlermeldesignal zur Schutzzündung des Abschaltthyristors erzeugt, wenn der Zeitablauf vor dem Auftreten des Zustandssignals beendet ist. Dadurch wird eine Überlastung des Abschaltthyristors erkannt.

Durch diese Maßnahmen soll das Abschaltversagen eines abschaltbaren Stromrichterventils eines Brückenzweiges eines Stromrichters erkannt werden, wodurch ein unerwünschter Kurzschluß der Gleichspannungsseite des Stromrichters vermieden werden kann, in dem das Zünden des zweiten abschaltbaren Stromrichterventils dieses Brückenzweiges verhindert wird. Um die Häufigkeit solcher gleichstromseitigen Kurzschlüsse erheblich zu senken, werden sehr oft mehrere Maßnahmen gleichzeitig angewendet.

Jedoch wurde festgestellt, daß bei hohen Lastströmen und hohen Sperrschichttemperaturen das abschaltbare Stromrichterventil die wiederkehrende Blockierspannung nicht hält. Da das zweite Ventil des Brückenzweiges zum Fehlerzeitpunkt bereits gezündet ist, kann dieser Fehler nicht durch die bekannte Maßnahme verhindert werden.

Der Erfindung liegt nun die Aufgabe zugrunde, ein Verfahren und eine Schaltungsanordnung zur Steuerung von abschaltbaren Stromrichterventilen eines Brückenzweiges eines Stromrichters anzugeben, mit dem der aufgezeigte Nachteil behoben werden kann.

Diese Aufgabe wird erfindungsgemäß durch die im kennzeichnenden Teil des Anspruchs 1 angegebenen Verfahrensschritte gelöst. Dadurch, daß in Abhängigkeit der Polarität des Laststromes die mittels Steuervorrichtungen erzeugten Steuersignale für die beiden abschaltbaren Stromrichterventile eines Brückenzweiges freigegeben werden, d.h. jeweils zu den Steuerelektroden weitergeleitet werden, wird die Zeitspanne zwischen dem Ausschalten des einen abschaltbaren Stromrichterventils und dem Einschalten des zweiten abschaltbaren Stromrichterventils eines Brückenzweiges wesentlich vergrößert. Somit wird das Folgeventil des Brückenzweiges erst dann gezündet, wenn die Blockierspannung bereits einige Zeit wieder am abgeschalteten Stromrichterventil ansteht. Wird innerhalb dieser Zeit die wiederkehrende Blockierspannung vom abschaltbaren Stromrichterventil nicht gehalten, so kann ein gleichspannungsseitiger Kurzschluß des Stromrichters nicht auftreten, da das Folgeventil des Brückenzweiges noch gar nicht gezündet ist.

Eine Schaltungsanordnung zur Durchführung des erfindungsgemäßen Verfahrens besteht darin, daß der aus der EP 0 176 800 A1 bekannte Steuervorrichtung für jedes abschaltbare Stromrichterventil ein UND-Gatter nachgeschaltet ist, dessen Ausgang mit einer Steuerelektrode des abschaltbaren Stromrichterventils und dessen zweiter Eingang mit einem Ausgang eines Komparators verbunden ist, der eingangsseitig mit einer im Brückenstrang angeordneten Meßeinrichtung verknüpft ist. Am Ausgang eines jeden Komparators steht ein in Abhängigkeit des Laststrom-Istwertes erzeugtes Freigabesignal an, der das erzeugte Steuersignal eines Stromrichterventils in Abhängigkeit der Polarität des Laststromes freigeben kann.

Zur weiteren Erläuterung der Erfindung wird auf die Zeichnung Bezug genommen, in der eine Ausführungsform der Schaltungsanordnung zur Durchführung des erfindungsgemäßen Verfahrens schematisch veranschaulicht ist.

Figur 1
zeigt eine Ausführungsform der Schaltungsanordnung zur Durchführung des Verfahrens, in

Figur 2
ist die Steuerspannung $U_{St}$ einer übergeordneten Regelung in einem Diagramm über der Zeit t dargestellt, die

Figuren 3 und 4
veranschaulichen die Steuersignale AV1' und AV2' der Stromrichterventile eines Brückenzweiges in einem Diagramm über der Zeit t, in

Figur 5 bzw. Figur 6
ist der Laststrom $i_{Lx}$ bzw. die Lastspannung $u_L$ jeweils in einem Diagramm über der Zeit t dargestellt, in den

Figuren 7 und 8
ist jeweils ein Freigabesignal F1 bzw. F2 in einem Diagramm über der Zeit t dargestellt und die

Figuren 9 und 10
veranschaulichen die gesteuerten Steuersignale AV1 und AV2 jeweils in einem Diagramm über der Zeit t.

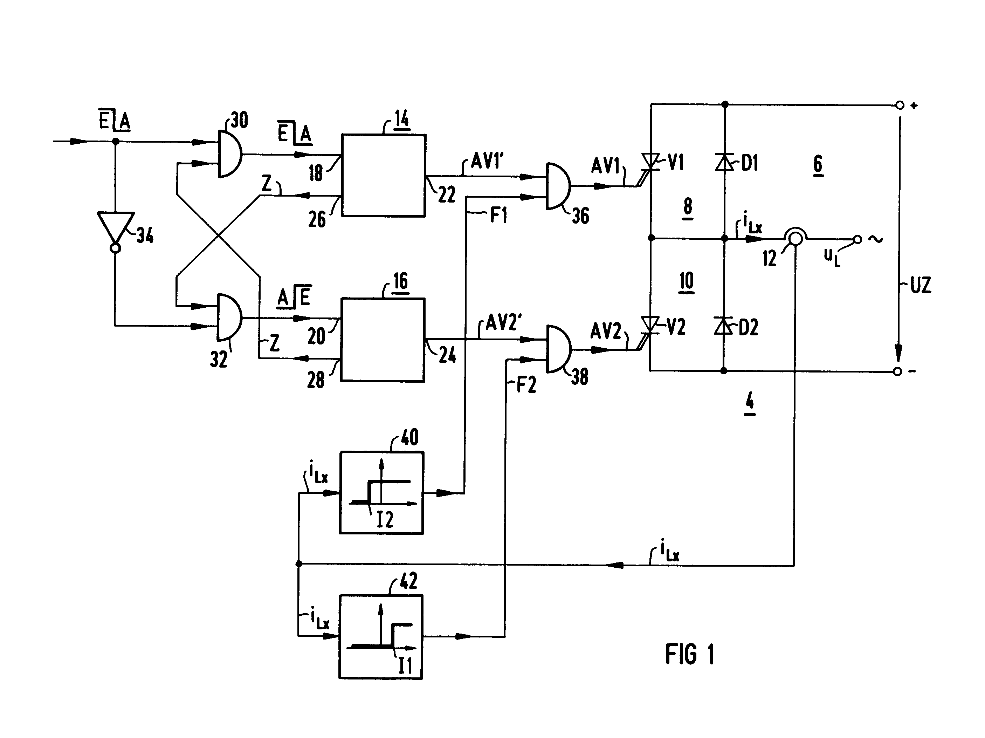

Die Figur 1 zeigt eine Steuerschaltung 2 und einen Stromrichter 4. Der Übersichtlichkeit halber ist vom Stromrichter 4 nur ein Brückenzweig 6 näher dargestellt. In der ersten Brückenzweighälfte 8 ist ein erstes abschaltbares Stromrichterventil V1 und eine antiparallele Freilaufdiode D1 angeordnet. In der zweiten Brückenzweighälfte 10 ist ein zweites abschaltbares Stromrichterventil V2 und eine antiparallele Freilaufdiode D2 angeordnet. Dem Stromrichter 4 wird eingangsseitig eine Gleichspannung UZ eingeprägt. Als abschaltbares Stromrichterventil V1 bzw. V2 kann, wie dargestellt, ein Abschaltthyristor vorgesehen sein. Außerdem kann als abschaltbares Stromrichterventil V1 bzw. V2 auch ein Transistor vorgesehen sein. Im Brückenstrang ist eine Meßeinrichtung 12 zur Ermittlung des Laststrom-Istwertes $i_{Lx}$ angeordnet.

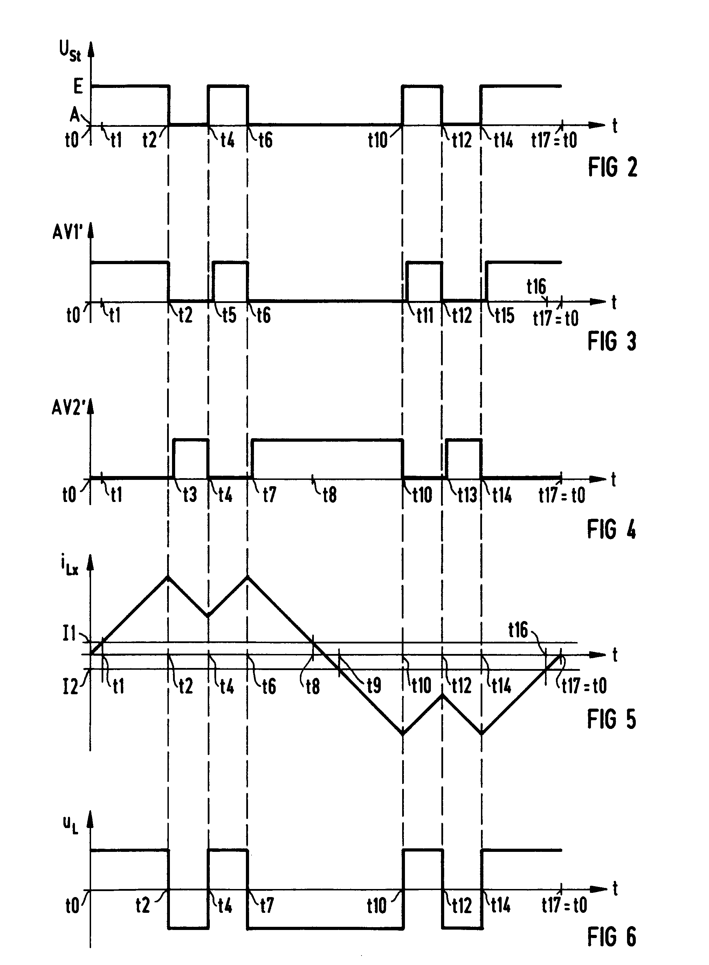

Die Steuerschaltung 2 enthält zwei Steuervorrichtungen 14 und 16, deren schaltungsmäßiger Aufbau den Figuren 2, 3 oder 6 der EP 0 176 800 A1 entnommen werden kann. Die Steuervorrichtung 14 bzw. 16 enthält einen Steuereingang 18 bzw. 20 und einen Steuerausgang 22 bzw. 24. Mit 26 bzw. 28 ist ein Zustandssignalausgang der Steuervorrichtung 14 bzw. 16 bezeichnet, an dem ein Zustandssignal Z erzeugt wird, wenn sich das erste bzw. zweite abschaltbare Stromrichterventil V1 bzw. V2 in einem stromsperrenden Schaltzustand befindet. Dem Steuereingang 18 bzw. 20 ist ein UND-Gatter 30 bzw. 32 vorgeschaltet, an dessen ersten Eingang ein Einschaltbefehl E bzw. ein Ausschaltbefehl A, der mittels eines Inverters 34 aus dem Einschaltbefehl E abgeleitet ist, ansteht. Der zweite Eingang des UND-Gatters 30 bzw. 32 ist mit dem Zustandssignalausgang 28 bzw. 26 der Steuervorrichtung 16 bzw. 14 verknüpft.

Der Steuerausgang 22 bzw. 24 der Steuervorrichtung 14 bzw. 16, an dem ein Steuersignal AV1' bzw. AV2' ansteht, ist mit einem ersten Eingang eines weiteren UND-Gatters 36 bzw. 38 verknüpft, dessen Ausgang mit der Steuerelektrode des abschaltbaren Stromrichterventils V1 bzw. V2 verbunden ist. Der zweite Eingang des weiteren UND-Gatters 36 bzw. 38 ist mit dem Ausgang eines Komparators 40 bzw. 42 verknüpft. Der Eingang des Komparators 40 und 42 ist mit der in der Brückenphase angeordneten Meßeinrichtung 12 verbunden.

Der Komparator 40 vergleicht den ermittelten Laststrom-Istwert $i_{Lx}$ mit einem vorbestimmten Laststrom-Grenzwert I2, der kleiner als Null ist. Der Komparator 42 vergleicht den ermittelten Laststrom-Istwert $i_{Lx}$ mit einem vorbestimmten Laststrom-Grenzwert I1, der größer als Null ist. Mittels dieser Komparatoren 40 und 42 wird die Polarität des Laststrom-Istwertes $i_{Lx}$ ermittelt. Jedesmal, wenn der Laststrom-Istwert $i_{Lx}$ den einen oder anderen Laststrom-Grenzwert I2 oder I1 über- bzw. unterschreitet, steht am Ausgang des Komparators 40 bzw. 42 ein Freigabesignal F1 bzw. F2 an. In Abhängigkeit dieses Freigabesignals F1 bzw. F2 werden Teile des Steuersignals AV1' bzw. AV2' zum Stromrichterventil V1 bzw. V2 weitergeleitet, die mit AV1 bzw. AV2 gekennzeichnet sind. Dieses Steuersignal AV1 bzw. AV2 wird deshalb als gesteuertes Steuersignal AV1 bzw. AV2 bezeichnet.

Anhand der Figuren 2 bis 10 soll die Funktionsweise der Steuerschaltung 2 nach Figur 1 näher erläutert werden:

Zunächst wird bei der Funktionsbeschreibung der Steuerschaltung 2 nach Figur 1 auf den erfindungsgemäßen Teil wegen der Übersichtlichkeit nicht eingegangen.

Von einer übergeordneten Regelung kommen die Ein- und Ausschaltbefehle E und A, die in der Figur 2 als Steuerspannung $U_{St}$ in einem Diagramm über der Zeit t dargestellt sind. Der Einschaltbefehl E zum Zeitpunkt t0 gelangt über das UND-Gatter 30 zum Steuereingang 18 der Steuervorrichtung 14, da am zweiten Eingang dieses UND-Gatters 30 das Zustandssignal Z ansteht. Diese Steuervorrichtung 14 erzeugt ein Steuersignal AV1' gemäß Figur 3. Dadurch geht das abschaltbare Stromrichterventil V1 in den stromleitenden Schaltzustand. Zum Zeitpunkt t2 steht am ersten Eingang des UND-Gatters 30 ein Ausschaltbefehl A und am ersten Eingang des UND-Gatters 32 infolge des Invertierers 34 ein Einschaltbefehl E. Zum Zeitpunkt t3 erscheint am zweiten Eingang des UND-Gatters 32 ein Zustandssignal Z vom ersten Stromrichterventil V1, womit angezeigt wird, daß das erste abschaltbare Stromrichterventil V1 des Brückenzweiges 6 des Stromrichters 4 in den stromsperrenden Schaltzustand gegangen ist. Durch die Generierung des Zustandssignals Z gelangt der Einschaltbefehl E an den Steuereingang 20 der Steuervorrichtung 16, die ein Steuersignal AV2' erzeugt, gemäß Figur 4. In der Zeit t2-t0 steigt der Laststrom $i_{Lx}$ gemäß Figur 5 linear an und die Lastspannung $u_L$ ist gemäß Figur 6 positiv. Mit dem Ausschaltbefehl A zum Zeitpunkt t2 wechselt die Lastspannung $u_L$ sein Vorzeichen und der Laststrom $i_{Lx}$ fließt, da der Strom seine Richtung wegen einer induktiven Last nicht schlagartig wechseln kann, über die Freilaufdiode D2 mit derselben Polarität weiter, wobei die Amplitude gemäß Figur 5 linear abnimmt. Zum Zeitpunkt t3 ist das abschaltbare Stromrichterventil V1 im stromsperrenden Schaltzustand und dadurch kann das abschaltbare Stromrichterventil V2 in den stromleitenden Schaltzustand übergehen (Figur 4). Zum Zeitpunkt t4 erscheint wieder ein Einschaltbefehl E (Figur 2) für das erste abschaltbare Stromrichterventil V1 des Brückenzweiges 6 und damit auch ein Ausschaltbefehl A für das zweite abschaltbare Stromrichterventil V2. Dadurch geht das abschaltbare Stromrichterventil V2 in den stromsperrenden Schaltzustand, währenddessen infolge des Polaritätswechsels der Lastspannung $u_L$ (Figur 6) der Laststrom $i_{Lx}$ durch die Freilaufdiode D1 fließt. Zum Zeitpunkt t5 ist das abschaltbare Stromrichterventil V2 im stromsperrenden Schaltzustand und das abschaltbare Stromrichterventil V1 übernimmt wieder die Stromführung. Durch eine positive Lastspannung $u_L$ steigt die Amplitude des Laststromes $i_{Lx}$ wieder an (Figur 6). Zum Zeitpunkt t6 erhält das erste abschaltbare Stromrichterventil V1 einen Ausschaltbefehl A und das zweite abschaltbare Stromrichterventil V2 einen Einschaltbefehl E. Zum Zeitpunkt t7 ist das erste abschaltbare Stromrichterventil V1 im stromsperrenden Schaltzustand und das zweite abschaltbare Stromrichterventil V2 wird angesteuert. Da die Lastspannung $u_L$ negativ ist, nimmt die Amplitude des Laststromes $i_{Lx}$ ab und welchselt seine Polarität (Figur 6). In der Zeitspanne t12-t10, insbesondere in der Zeitspanne t12-t11 (Stromrichterventil V1 im stromführenden Schaltzustand) nimmt die negative Amplitude des Laststromes $i_{Lx}$ ab, da während dieser Zeitspanne die Lastspannung $u_L$ positiv ist. In der Zeit von t13 bis t14 ist das zweite abschaltbare Stromrichterventil V2 wieder im stromführenden Schaltzustand, wodurch mittels einer negativen Lastspannung $u_L$ die negative Amplitude des Laststromes $i_{Lx}$ wieder zunimmt. In der Zeit von t15 bis t17 = t0 ist wieder das erste abschaltbare Stromrichterventil V1 im stromführenden Schaltzustand. Da die Lastspannung $u_L$ wieder positiv ist, nimmt die negative Amplitude des Laststromes $i_{Lx}$ wieder ab und wechselt bei t17 = t0 seine Polarität. Zum Zeitpunkt t17 = t0 ist eine Periode abgeschlossen und eine nächste Periode schließt sich daran an.

Wenn in der Zeitspanne t3-t2 bzw. t5-t4 bzw. t7-t6 bzw. t11-t10 bzw. t13-t12 bzw. t15-t14 die Sperrschichttemperatur des Stromrichterventils V1 bzw. V2 bzw. V1 bzw. V2 bzw. V1 bzw. V2 sich nicht verringert hat, kann es vorkommen, daß die wiederkehrende Blockierspannung vom Stromrichterventil V1 bzw. V2 nicht gehalten werden kann. Da jedoch dann das andere Stromrichterventil V2 bzw. V1 des Brückenzweiges 6 bereits im stromführenden Schaltzustand sich befindet, wird die Gleichstromseite des Stromrichters 4 kurzgeschlossen.

Mit dem erfindungsgemäßen Verfahren wird dies verhindert. Dazu werden die Polaritäten des Laststromes $i_{Lx}$ ermittelt. Da ein derartiges Abschaltversagen nicht bei kleinen Lastströmen und damit bei niedrigen Sperrschichttemperaturen auftritt, sind zwei Laststrom-Grenzwerte I1 und I2 bestimmt, die jeweils vom Laststrom $i_{Lx}$ über- bzw. unterschritten werden müssen. Der Laststrom-

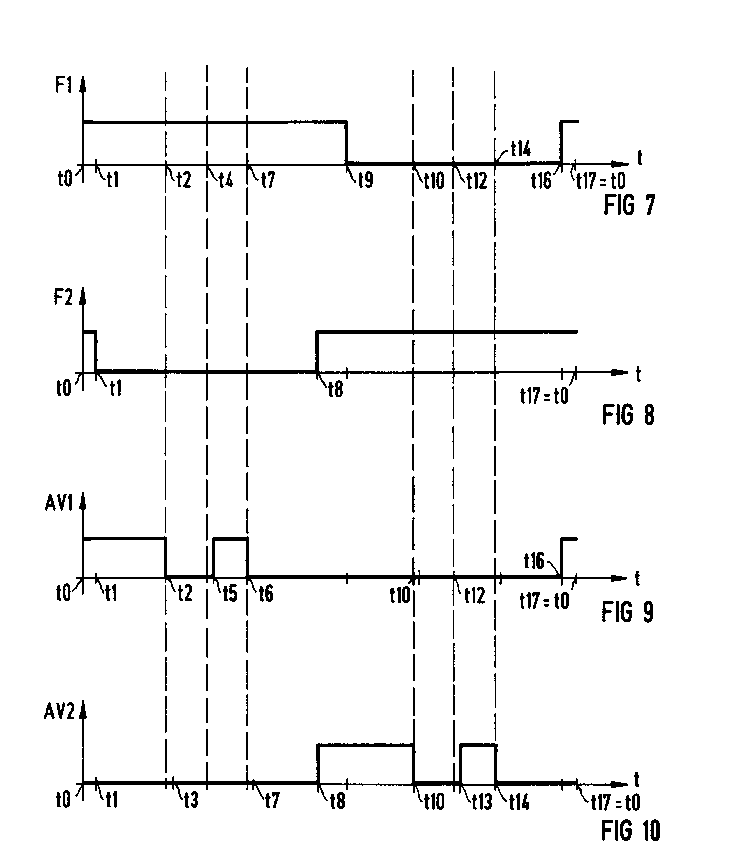

Grenzwert I1 ist größer Null und der Laststrom-Grenzwert I2 ist kleiner Null. Zum Zeitpunkt t1 überschreitet der Laststrom $i_{Lx}$ den positiven Grenzwert I1, wodurch das Freigabesignal F2 gemäß Figur 8 vom high-Zustand in den low-Zustand wechselt. Zum Zeitpunkt t8 unterschreitet der Laststrom $i_{Lx}$ wiederden positiven Grenzwert I1, wodurch das Freigabesignal F2 in den high-Zustand wechselt. Zum Zeitpunkt t9 unterschreitet der Laststrom $i_{Lx}$ auch noch den negativen Grenzwert I2, wodurch das Freigabesignal F1 gemäß Figur 7 vom high-Zustand in den low-Zustand wechselt. Zum Zeitpunkt t16 überschreitet der Laststrom $i_{Lx}$ wieder den negativen Laststrom-Grenzwert I2 und das Freigabesignal F1 geht in den high-Zustand über (Figur 7). Zum Zeitpunkt t18, der dem Zeitpunkt t1 der nächsten Periode entspricht, überschreitet der Laststrom $i_{Lx}$ auch noch den positiven Laststrom-Grenzwert I1, wodurch das Freigabesignal F1 gemäß Figur 8 wieder in den low-Zustand wechselt.

Immer wenn das Freigabesignal F1 bzw. F2 "low" ist, werden die bereitgestellten Steuersignale AV1' bzw. AV2' ausgeblendet. Dadurch erhält man die gesteuerten Steuersignale AV1 und AV2, die jeweils in der Figur 9 bzw. Figur 10 in einem Diagramm über der Zeit t dargestellt sind. Wenn nun beispielsweise zum Zeitpunkt t2 das abschaltbare Stromrichterventil V1 abgeschaltet wird, zum Zeitpunkt t3 durch ein generiertes Zustandssignal Z anzeigt, daß es im stromsperrenden Schaltzustand ist, kann es zu einem beliebigen Zeitpunkt in der Zeitspanne t4-t3 bzw. t5-t3 passieren, daß dieses Stromrichterventil V1 die wiederkehrende Blockierspannung nicht halten kann. Daraus resultiert jedoch kein gleichstromseitiger Kurzschluß des Stromrichters 4, da das zweite abschaltbare Stromrichterventil V2 des Brückenzweiges 6 nicht angesteuert ist. In Abhängigkeit der einstellbaren Laststrom-Grenzwerte I1 und I2 können die Ausblendzeiten, währenddessen die bereitgestellten Steuerimpulse AV1' und AV2' nicht zu den Steuerelektroden der abschaltbaren Stromrichterventile V1 und V2 eines Brückenzweiges 6 geführt werden, verändert werden.

## Patentansprüche

1.　Verfahren zur Steuerung von abschaltbaren Stromrichterventilen (V1, V2) eines Brückenzweiges (6) eines Stromrichters (4) mit eingeprägter Gleichspannung (UZ), die alternierend ein- und ausschalten in Abhängigkeit von Steuersignalen (AV1', AV2'), die jeweils von einer Steuervorrichtung (14, 16) erzeugt werden, **gekennzeichnet** durch folgende Verfahrensschritte:

　　a) Ermittlung eines Laststrom-Istwertes ($i_{Lx}$),

b) Generierung eines ersten Freigabesignals (F1), sobald der ermittelte Laststrom-Istwert ($i_{Lx}$) größer ist als ein vorbestimmter negativer Laststrom-Grenzwert (I2),

c) Generierung eines zweiten Freigabesignals (F2), sobald der ermittelte Laststrom-Istwert ($i_{Lx}$) kleiner ist als ein vorbestimmter positiver Laststrom-Grenzwert (I1) und

d) gesteuerte Freigabe der bereitgestellten Steuersignale (AV1', AV2') in Abhängigkeit der generierten Freigabesignale (F1, F2).

2. Schaltungsanordnung zur Durchführung des Verfahrens nach Anspruch 1 mit einer Steuervorrichtung (14, 16) für jedes abschaltbare Stromrichterventil (V1, V2) eines Brückenzweiges (6) eines Stromrichters (4), wobei jeder Steuervorrichtung (14, 16) ein UND-Gatter (30, 32) vorgeschaltet ist, deren erste Eingänge mit einem Ein- bzw. Abschaltbefehl (E bzw. A) beaufschlagt sind und deren zweite Eingänge jeweils mit einem Zustandssignalausgang (28, 26) der anderen Steuervorrichtung (16, 14) verknüpft sind, **dadurch gekennzeichnet**, daß im Brückenstrang eine Meßeinrichtung (12) zur Ermittlung des Laststrom-Istwertes ($i_{Lx}$) vorgesehen ist, daß jeder Steuervorrichtung (14, 16) ein UND-Gatter (36, 38) nachgeschaltet ist, deren Ausgänge jeweils mit einer Steuerelektrode eines abschaltbaren Stromrichterventils (V1, V2) und deren zweite Eingänge jeweils mit einem Ausgang eines Komparators (40, 42) verbunden sind, und daß jeder Komparator (40, 42) eingangsseitig mit der Meßeinrichtung (12) verknüpft ist.

3. Schaltungsanordnung nach Anspruch 2, **dadurch gekennzeichnet**, daß als abschaltbares Stromrichterventil (V1, V2) ein GTO-Thyristor vorgesehen ist.

4. Schaltungsanordnung nach Anspruch 2, **dadurch gekennzeichnet**, daß als abschaltbares Stromrichterventil (V1, V2) ein Transistor vorgesehen ist.

FIG 1

EP 0 465 699 A1

FIG 2

FIG 3

FIG 4

FIG 5

FIG 6

FIG 7

FIG 8

FIG 9

FIG 10

Europäisches
Patentamt

**EUROPÄISCHER
RECHERCHENBERICHT**

Nummer der Anmeldung

**EP 90 11 3179**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 641 231  (L. H. WALKER ET AL.) <br> * Spalte 7, Zeile 14 - Spalte 7, Zeile 57; Figur 6 * <br> – – – | 1-3 | H 02 M 7/521 <br> H 03 K 17/08 |
| D,A | EP-A-0 176 800  (SIEMENS) <br> * Seite 33, Zeile 6 - Seite 34, Zeile 17; Figur 9 * <br> – – – – – | 1-3 | |

**RECHERCHIERTE
SACHGEBIETE (Int. Cl.5)**

H 02 M
H 02 H
H 03 K

**Der vorliegende Recherchenbericht wurde für alle Patentansprüche erstellt**

| Recherchenort | Abschlußdatum der Recherche | Prüfer |
|---|---|---|
| Den Haag | 28 Februar 91 | GARDELLA S. |